# EUROPEAN PATENT SPECIFICATION

(11) **EP 3 816 821 B1**
(45) Date of publication and mention of the grant of the patent: **11.10.2023**
(21) Application number: 21162737.7
(22) Date of filing: 16.03.2021
(51) Int. Cl.: G06F 16/2455, G06F 16/953, G06F 16/957

(54) **SEARCH METHOD AND APPARATUS, ELECTRONIC DEVICE AND STORAGE MEDIUM**
SUCHVERFAHREN UND -VORRICHTUNG, ELEKTRONISCHES GERÄT UND SPEICHERMEDIUM
PROCEDE ET APPAREIL DE RECHERCHE, DISPOSITIF ELECTRONIQUE ET MOYEN DE STOCKAGE

(30) Priority: 25.09.2020 CN 202011020778
(43) Date of publication of application: 05.05.2021
(73) Proprietor: Baidu International Technology (Shenzhen) Co., Ltd, Shenzhen, Guangdong 518000 (CN)
(72) Inventor: LIU, Junqi, Shenzhen, Guangdong Province, 518000 (CN)
(74) Representative: Weickmann & Weickmann PartmbB

(56) References cited:
- CN-B- 106 649 640
- US-A1- 2013 191 360
- US-A1- 2013 282 749
- US-A1- 2016 306 895

## Description

### TECHNICAL FIELD

The present disclosure relates to the field of computer technologies, specifically relates to the field of search technology, in particular to a search method, a search apparatus, an electronic device and a storage medium.

### BACKGROUND

Conventionally, when a user performs a search on the Internet, a search request to a server is usually not initiated until the user inputs a keyword into a search box and initiates a search instruction (e.g., by clicking on a search button or an Enter key). After receiving resources of a search result page returned by the server, the client performs page rendering according to the resources of the search result page returned by the server. With conventional search methods, a search response speed is slow.

US 2013/282749 A1 discloses a keyword search method. US 2016/306895 A1 discloses pre-rendering resources for a web page for quick display if requested.

### SUMMARY

A search method, a search apparatus, an electronic device and a storage medium are provided in the present disclosure.

The invention is defined by the attached claims.

### BRIEF DESCRIPTION OF THE DRAWINGS

Drawings are included to provide a better understanding of the present disclosure and are not to be construed as limiting the present disclosure, in which:
Fig. 1 is a schematic flowchart of a search method according to a first embodiment of the present disclosure;
Fig. 2 is a schematic structural diagram of a client and a server according to the first embodiment of the present disclosure;
Fig. 3 is an example of the search method according to the first embodiment of the present disclosure;
Fig. 4 is a schematic structural diagram of a search apparatus according to a second embodiment of the present disclosure;
Fig. 5 is a block diagram of an electronic device for implementing the search method in the embodiment of the present disclosure.

### DETAILED DESCRIPTION

Exemplary embodiments of the present disclosure are described below with reference to the drawings. The drawing include various details of embodiments of the present disclosure to facilitate understanding, and are to be deemed as being exemplary only. Also, descriptions of well-known functions and structures are omitted from the following description for clarity and conciseness.

### First embodiment

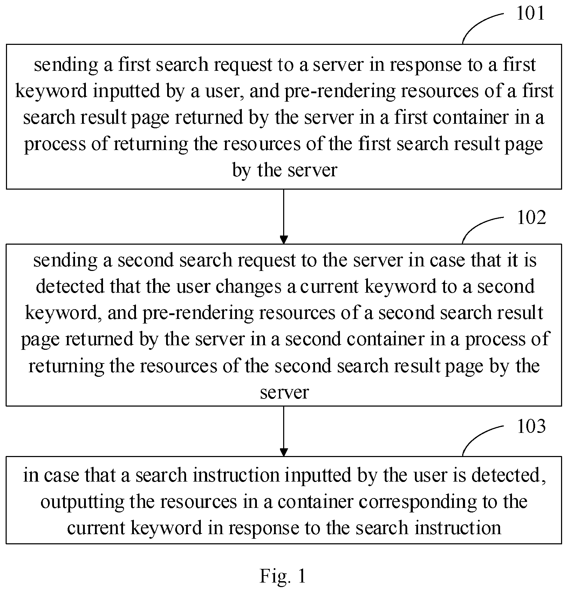

As shown in Fig. 1, a search method is provided in the embodiment of the present disclosure. The search method includes a step 101, a step 102 and a step 103.

Step 101, sending a first search request to a server in response to a first keyword inputted by a user, and pre-rendering resources of a first search result page returned by the server in a first container in a process of returning the resources of the first search result page by the server; where the first search result page is a search result page corresponding to the first keyword.

A "keyword" described in present disclosure, such as the above-mentioned first keyword, a target keyword or a second keyword in the following description, may be understood as referring to a content inputted by the user into a search box during one search process. When a search instruction is inputted by the user, a current keyword in the search box becomes a search term, a query term or a query. Here, one search process may be understood as referring to an entire process from inputting the keyword into the search box by the user to inputting the search instruction by the user and displaying a search result page.

The search method in the embodiment of the present disclosure may be implemented by a client having a search function, such as a mobile phone, a tablet or a personal computer (PC).

In the related art, a search request to a server is not initiated by a client until a user inputs a search instruction, e.g., by clicking on a search button or an Enter key. Unlike the related art, in the embodiment of the present disclosure, when the user inputs a keyword, the client may send a search request to the server in real time.

Generally, in one search process, a process of inputting the keyword by the user is a dynamic process, and a process of inputting the keyword may be different for different users. In one search process, the user may input keywords multiple times, that is, the user inputs the search instruction after keywords are inputted multiple times; or, the user may input the keyword in one go, that is, the user inputs the search instruction after the keyword is inputted once. For example, when a user wants to search "Bai Li's homesickness poems", the user may input into a search box "Bai Li's", "homesickness" and "poems" sequentially, or "Bai Li", "'s", "homesickness" and "poems" sequentially, or "Bai Li's homesickness poems", etc.

The first keyword inputted by the user may be understood as referring to a keyword inputted initially by the user, or, a keyword inputted by the user for the first time. That is, when it is detected that the user inputs a keyword for the first time, the client may initiate a search request to the server. For example, when "Bai Li's" is inputted by the user, "Bai Li's" may be used as the first keyword.

The first keyword inputted by the user may also be understood as referring to the first keyword having a clear meaning inputted by the user. The keyword having the clear meaning may be a keyword inputted initially, or a keyword as a result of multiple inputs. For example, when the user inputs "Bai", "Li", "'s", ..., sequentially, the client may initiate a search request to the server when the keyword "Bai" is inputted, or the client may initiate the search request to the server when the keyword "Bai Li" is inputted. In other words, the first keyword may be the initially inputted keyword "Bai", or the first keyword having the clear meaning, i.e., "Bai Li".

Of course, the first keyword inputted by the user may also be understood as referring to a keyword having other meanings, which is not limited herein.

In the embodiment of the present disclosure, the keyword may be inputted by the user by means of voice input or text input.

In this step, the client sends the first search request to the server in response to the first keyword inputted by the user. The server returns resources of a corresponding search result page, i.e., resources of the first search result page, to the client after the first search request sent by the client is received. The client receives the resources of the first search result page returned by the server, and pre-renders the returned resources in the first container in the process of returning the resources of the first search result page by the server. Pre-rendered resources are loaded in the first container. The first container may be a container created by the client in advance, and may be used to store the pre-rendered resources.

It can be seen, through the above process, the client may acquire resources of the search result page from the server in advance, and stores the resources of the search result page locally through pre-rendering.

It is noted, the container described with respect to the embodiments of the present disclosure may be understood as referring to a pre-rendering container. The container described with respect to the embodiments of the present disclosure may be a container for loading a web page, a container for loading a small program, or a container for loading structured data.

Step 102, sending a second search request to the server in case that it is detected that the user changes a current keyword to a second keyword, and pre-rendering resources of a second search result page returned by the server in a second container in a process of returning the resources of the second search result page by the server, where the second search result page is a search result page corresponding to the second keyword.

As mentioned above, in one search process, the process of inputting the keyword by the user is a dynamic process. Therefore, after the first keyword is inputted by the user, the keyword may be changed. There are a variety of manners for changing the keyword, such as adding a new content on the basis of the current keyword, modifying a part of the current keyword, or replacing the current keyword with a new keyword.

For example, in case that a keyword "Bai Li's" is inputted by the user, the current keyword is "Bai Li's". In case that a keyword "homesickness" is further inputted by the user, the user changes the current keyword "Bai Li's" to a second keyword, i.e., "Bai Li's homesickness". For another example, in case that a keyword "Bai Li's" is inputted by the user, the current keyword is "Bai Li's". In case that the user modifies the keyword "Bai Li's" to "Fu Du's", the second keyword is "Fu Du's". For still another example, in case that a keyword "Ba Li" is inputted by the user, the current keyword is "Ba Li". In case that the user modifies "Ba" in the keyword "Ba Li" to "Bai", the second keyword is "Bai Li".

In this step, no matter in which manner the keyword is inputted by the user, in one search process, every time a new keyword is inputted by the user, the client may send a new search request (i.e., the second search request) to the server in real time based on the current keyword (i.e., the second keyword). Taking a case in which the user inputs "Bai Li's", "homesickness" and "poems" sequentially as an example, when the user inputs "Bai Li's", the client sends a search request for "Bai Li's" to the server. When the user further inputs "homesickness", the client sends a search request for "Bai Li's homesickness" to the server. When the user further inputs "poems", the client sends a search request for "Bai Li's homesickness poems" to the server.

In this step, the client receives resources of a new search result page (i.e., the second search result page) returned by the server, and pre-renders the returned resources in the second container in the process of returning the resources of the second search result page by the server. Pre-rendered resources are loaded in the second container. The second container may be a container created by the client in advance, and may be used to store the pre-rendered resources.

It can be seen, through the above process, the client may acquire, in advance, resources of different search result pages dynamically and in real-time from the server during a keyword input process, and store the resources of different search result pages in different containers locally through pre-rendering.

It is noted, the second keyword is not limited to the keyword of an exact input by the user. The second keyword may be a keyword as a result of a second input by the user, or a keyword as a result of a third or further input. A keyword as a result of each change may be understood as the second keyword.

In order to illustrate the dynamic and real-time search manner involved in the keyword input process in a clearer manner, a description will be given below by taking a case in which the user inputs "Bai Li's", "homesickness" and "poems" sequentially into the search box as an example.

When the user inputs "Bai Li's" into the search box, the client initiates a search request for "Bai Li's" to the server. The server returns resources of a search result page A1 to the client. The client receives the resources of the search result page A1 returned by the server, and pre-renders the resources of the search result page A1 in a container a1. Pre-rendered resources B1 are loaded in the container a1. The user further inputs "homesickness" into the search box, the client initiates the search request for "Bai Li's homesickness" to the server. The server returns resources of a search result page A2 to the client. The client receives the resources of the search result page A2 returned by the server, and pre-renders the resources of the search result page A2 in a container a2. Pre-rendered resources B2 are loaded in the container a2. The user further inputs "poems" into the search box, the client initiates the search request for "Bai Li's homesickness poems" to the server. The server returns resources of a search result page A3 to the client. The client receives the resources of the search result page A3 returned by the server, and pre-renders the resources of the search result page A3 in a container a3. Pre-rendered resources B3 are loaded in the container a3.

Through the above process, the client may acquire, in advance, the resources of the search result page corresponding to the current keyword dynamically and in real-time, and pre-render resources of search result pages in different containers, such that pre-rendered resources may be loaded in the different containers. Thus, the client may store locally the resources of the search result pages from the server in advance.

Step 103, in case that a search instruction inputted by the user is detected, outputting the resources in a container corresponding to the current keyword in response to the search instruction.

In this step, when the search instruction inputted by the user is detected, since the resources of the search result page corresponding to the current keyword have been pre-loaded in the corresponding container, the client outputs the resources in the container corresponding to the current keyword.

Here, a specific process of outputting the resources in the container may be as follows: when the search instruction inputted by the user is detected, the container is switched from background to foreground, and the pre-rendered resources in the container are formed into a page for displaying to the user.

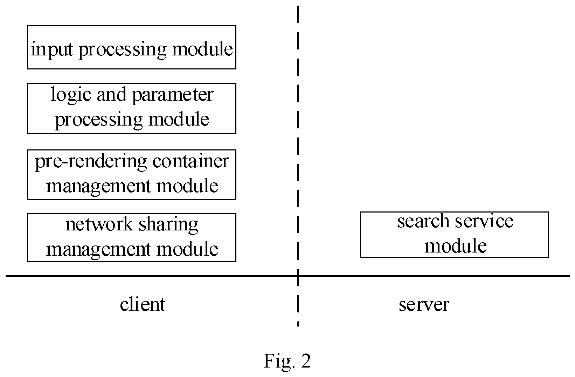

In order to achieve the above search process, as shown in Fig. 2, an input processing module, a logic and parameter processing module and a pre-rendering container management module may be provided in the client, and a search service module may be provided in the server. The input processing module may be used to monitor a content inputted by the user and transfer the content inputted by the user to the logic and parameter processing module. The pre-rendering container management module may be used to create, release or reuse a pre-rendering container. The logic and parameter processing module may be used to implement: (1) assembling search request parameters according to the keyword inputted by the user, (2) calling the pre-rendering container management module to load the resources of the corresponding search result page, and (3) outputting the resources in the container corresponding to the current keyword when a search action is confirmed by the user. The search service module may be used to provide a search-related service capability.

In the embodiment of the present disclosure, when a keyword is inputted by the user, a search request is submitted to the server in real time according to the inputted keyword, and resources returned by the server are pre-rendered in a container. When the inputted keyword is changed, a new search request is submitted to the server in real time, and a page pre-rendering is performed based on resources returned by the server in another container. In this way, when the search instruction is inputted by the user, the resources in the container corresponding to the current keyword may be outputted rapidly, thus the user may acquire the search result page corresponding to the current keyword rapidly. Compared with the related art, the search response speed may be improved and user waiting time is reduced according to the present disclosure.

For the search results page, a size of a page resource is usually on the order of a megabyte (MB), and the quantity of resources is usually on the order of 100. In order to reduce network resource consumption and further reduce time and resources spent on resource pre-rendering in the container, a multi-resource reusing strategy on the basis of the above search method is further provided in the embodiment of the present disclosure.

According to the invention, the method further includes: in the process of returning the resources of the second search result page by the server, in case that a first resource of the second search result page is the same as a second resource of the first search result page, reusing the second resource of the first container in the second container.

This involves the multi-resource reusing strategy Specifically, if there is a resource in the second search result page that is the same as a resource of the first search result page, the client uses the same resource for local reusing, without sending a network request again. In this way, on one hand, the client does not need to send a network request for the same resource to the server multiple times, and the server does not need to return the same resource multiple times for the network requests for the same resource, thereby reducing the network resource consumption. On the other hand, the same resource does not need to be pre-rendered multiple times in different containers, thereby reducing the time and the resources spent on resource pre-rendering in the container. Therefore, by adopting the multi-resource reusing strategy, the search response speed may be further improved, meanwhile overall resource consumption is reduced in the embodiment of the present disclosure. Thus, the search experience of the user may be further improved.

In order to implement the multi-resource reusing strategy, as shown in Fig. 2, a network sharing management module may be further provided in the client. The network sharing management module may perform unified management and reusing of all resource requests in the search process. In this embodiment, it may be determined whether different resources are the same according to request parameters, such as url, header and body, of the different resources.

The multi-resource reusing strategy may be applied to a resource that has been acquired from the server (i.e., reusing of resources). According to the invention, it is a resource that is being acquired from the server but has not been acquired yet (i.e., reusing of resource request). For the resource that has been acquired from the server, if a resource in the first container is reusable in the second container, the resource in the first container can be directly reused in the second container. For the reusing of the resource request, the following implementation is adopted.

According to the invention, the reusing the second resource of the first container in the second container includes: in case that the second resource is in a resource request state, establishing an association between a resource request for the second resource and the second container; and in case that the second resource is loaded in the first container, reusing the second resource in the second container.

In this embodiment, if the second resource in the first container is being requested and is further depended on by the second container, a request for the second resource by the second container reuses the currently effective resource request in the first container, and an association between the second container and the resource request is established. After the resource request is fulfilled, the associated second container is notified, and the second resource is reused in the second container. Specifically, when the resource request is fulfilled, relevant data, including control parameters such as a cache duration and an HTTP Header, may be cached, and the relevant data and corresponding control parameters returned by the server are directly returned to the container depending on the second resource.

Both the reusing of the resource and the reusing of the resource request are achieved by adopting the multi-resource reusing strategy, thus the overall resource consumption is reduced to the maximum extent and the search response speed is improved to the maximum extent.

Since the quantity of pre-created containers is usually limited, an embodiment of the present disclosure further provides the following container reusing strategy.

Optionally, the pre-rendering the resources of the second search result page returned by the server in the second container in the process of returning the resources of the second search result page by the server includes: in case that all pre-created containers are occupied, selecting the second container from the pre-created containers for reusing, and pre-rendering the resources of the second search result page returned by the server in the second container in the process of returning the resources of the second search result page by the server.

In the embodiment, when all the pre-created containers are occupied, a certain container may be selected from the occupied containers for reusing, so as to ensure that the pre-created containers may be used in the search process in a better manner. With the container being reused, resources previously loaded in the container may be destroyed or released.

The reusing of the container may be implemented by using an algorithm such as a first-in-first-out algorithm or a least recently used algorithm. Assuming that a container a1, a container a2, and a container a3 are pre-created in the client, and the container a1 is occupied first, the container a2 is occupied subsequently, and the container a3 is occupied last, if a search request for a new keyword is generated currently, since all containers are occupied at this time, the container a1 may be reused for the search request for the current keyword.

Optionally, the method further includes: when the second container is reused or released, disassociating an ongoing resource request associated with the second container from the second container in case that there is the ongoing resource request associated with the second container.

In this embodiment, when the container is reused or released, the container is merely disassociated from the resource request originally generated in the container, and the resource request is not destroyed or released with the reusing or releasing of the container. Therefore, the resource request originally generated in the container may continue to be reused by a container in need. In this embodiment, the separate management of the resource request is achieved, which improves the reusability of the resource request, thus the overall resource consumption may be reduced to the maximum extent and the search response speed may be improved to the maximum extent.

It is noted, the reusing of the container and the reusing of the resource have different meanings. The reusing of the container is to reuse an occupied container, which represents the destruction and reuse of the container. The reusing of the resource is to load the same resource in different containers, which represent multiple uses of the resource.

Optionally, the disassociating the ongoing resource request associated with the second container from the second container in case that there is the ongoing resource request associated with the second container includes: in case that there is the ongoing resource request associated with the second container, and the ongoing resource request is reused or reusable in a third container, disassociating the resource request from the second container.

In this embodiment, if a resource request is depended on by multiple containers or capable of being depended on by multiple containers, when a certain container is reused or released, only the association between the resource request and the container is disassociated. In this way, other containers may continue to reuse the resource request, thus the overall resource consumption is reduced to the maximum extent and the search response speed is improved to the maximum extent.

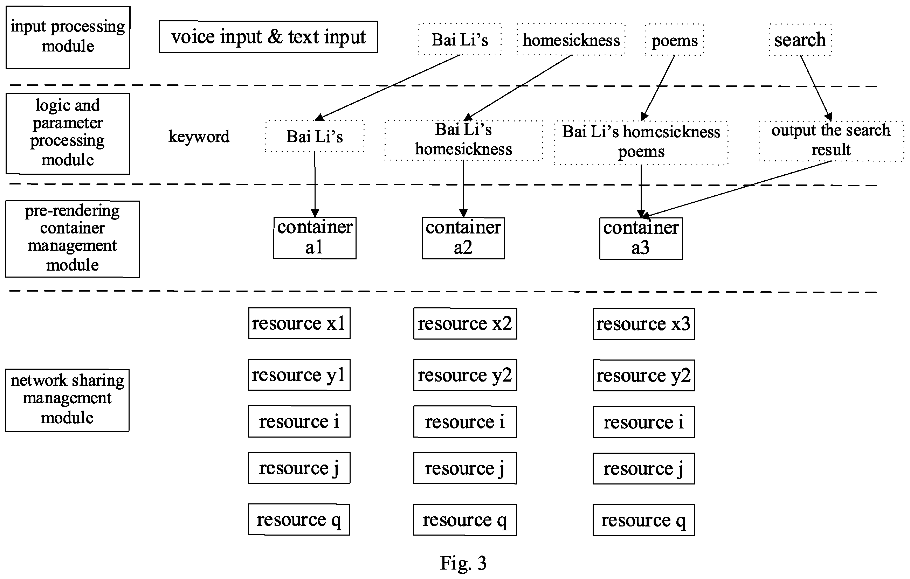

In order to provide a better understanding of the overall technical solution, a description is given below with reference to the example shown in Fig. 3.

As shown in Fig. 3, the user inputs "Bai Li's", "homesickness" and "poems" sequentially into the search box, which correspond to the keyword "Bai Li's", the keyword "Bai Li's homesickness" and the keyword "Bai Li's homesickness poems" respectively.

Resources of a search result page corresponding to "Bai Li's" include: a resource x1, a resource y1, a resource i, a resource j and a resource q. Resources of a search result page corresponding to "Bai Li's homesickness" include: a resource x2, a resource y2, the resource i, the resource j and a resource q. Resources of a search result page corresponding to "Bai Li's homesickness poems" include: a resource x3, the resource y2, the resource i, the resource j and the resource q.

Then, the resources of the search result page corresponding to "Bai Li's", namely, the resource x1, the resource y1, the resource i, the resource j and the resource q, may be pre-rendered in the container a1. The resource i, the resource j and the resource q in the container a1 may be reused in the container a2, and the resource y2 may be pre-rendered in the container a2. The resource i, the resource j and the resource q in the container a1 may be reused in the container a3, and the resource y2 in the container a2 may be reused in the container a3.

Further, when the resource i, the resource j and the resource q in the container a1 are reused in the container a2, if the resource i in the container a1 has been acquired from the server, the resource i in the container a1 may be reused directly in the container a2. If the resource j and the resource q in the container a1 have not been acquired from the server, an association between a resource request for the resource j and the resource q and the container a2 may be established. After the resource j and the resource q are acquired from the server, the resource j and the resource q are reused in the container a2.

Correspondingly, when the resource i, the resource j and the resource q in the container a1 are reused in the container a3, if the resource i and the resource j in the container a1 have been acquired from the server, the resource i and the resource j in the container a1 may be reused directly in the container a3. If the resource q in the container a1 has not been acquired from the server, an association between a resource request for the resource q and the container a3 may be established. After the resource q is acquired from the server, the resource q is reused in the container a3.

When the resource y2 in the container a2 is reused in the container a3, if the resource y2 in the container a2 has been acquired from the server, the resource y2 in the container a2 may be reused directly in the container a3. If the resource y2 in the container a2 has not been acquired from the server, an association between a resource request for the resource y2 and the container a3 may be established. After the resource y2 is acquired from the server, the resource y2 is reused in the container a3.

When the user inputs the search instruction, the client may output resources in the container a3, thereby rapidly displaying the search result page of "Bai Li's homesickness poems" to the user.

It should be appreciated that, multiple optional embodiments in the search method of the present disclosure may be implemented in combination with each other or implemented separately, which is not limited in the present disclosure.

The foregoing embodiments of the present disclosure have at least the following advantages or beneficial effects.

In the present disclosure, when a keyword is inputted by the user, a search request is submitted to the server in real time according to the inputted keyword, and resources returned by the server are pre-rendered in a container. When the inputted keyword is changed, a new search request is submitted to the server in real time, and a page pre-rendering is performed based on resources returned by the server in another container. In this way, when the search instruction is inputted by the user, the resources in the container corresponding to the current keyword may be outputted rapidly, thus the user may acquire the search result page corresponding to the current keyword rapidly. Compared with the related art, the search response speed may be improved according to the present disclosure.

### Second embodiment

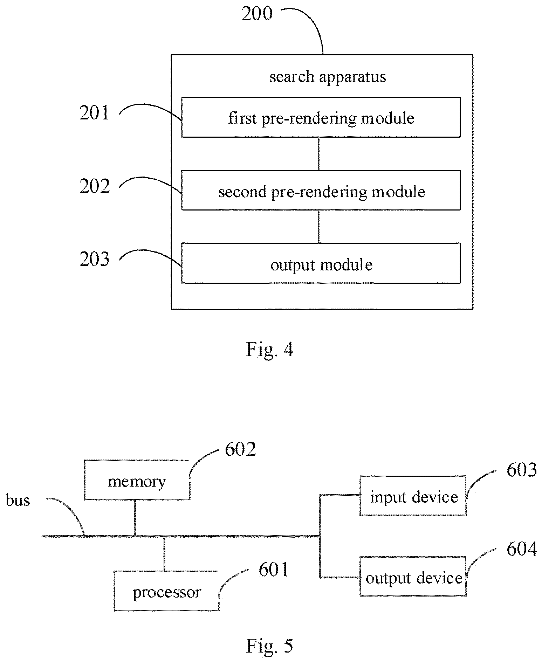

As shown in Fig. 4, the present disclosure provides a search apparatus 200. The search apparatus 200 includes: a first pre-rendering module 201, configured to send a first search request to a server in response to a first keyword inputted by a user; and pre-render resources of a first search result page returned by the server in a first container in a process of returning the resources of the first search result page by the server; where the first search result page is a search result page corresponding to the first keyword; a second pre-rendering module 202, configured to send a second search request to the server in case that it is detected that the user changes a current keyword to a second keyword; and pre-render resources of a second search result page returned by the server in a second container in a process of returning the resources of the second search result page by the server; where the second search result page is a search result page corresponding to the second keyword; and an output module 203, configured to, in case that a search instruction inputted by the user is detected, output resources in a container corresponding to the current keyword in response to the search instruction.

According to the invention, the search apparatus 200 further includes: a resource reusing module, configured to, in the process of returning the resources of the second search result page by the server, in case that a first resource of the second search result page is the same as a second resource of the first search result page, reuse the second resource of the first container in the second container.

According to the invention, the resource reusing module includes: an association sub-module, configured to, in case that the second resource is in a resource request state, establish an association between a resource request for the second resource and the second container; and a resource reusing sub-module, configured to, in case that the second resource is loaded in the first container, reuse the second resource in the second container.

Optionally, the second pre-rendering module 202 is specifically configured to: in case that all pre-created containers are occupied, select the second container from the pre-created containers for reusing, and in the process of returning the resources of the second search result page by the server, pre-render the returned resources in the second container.

Optionally, the search apparatus 200 further includes: a disassociation module, configured to, when the second container is reused or released, in case that there is an ongoing resource request in the second container, disassociate the resource request from the second container.

Optionally, the disassociation module is specifically configured to: in case that there is the ongoing resource request associated with the second container, and the ongoing resource request is reused or reusable in a third container, disassociate the resource request from the second container.

Optionally, the container includes at least one of: a container for loading a web page; a container for loading a small program; a container for loading structured data.

The search apparatus 200 according to the present disclosure is capable of implementing various processes in the embodiment of the search method, and achieve the same beneficial effects. To avoid repetition, details are not described herein again.

According to embodiments of the present disclosure, an electronic device and a computer readable storage medium are further provided.

As shown in Fig. 5, a block diagram of an electronic device for implementing the search method in the embodiment of the present disclosure is shown. The electronic device is intended to represent various forms of digital computers, such as a laptop computer, desktop computer, workstation, personal digital assistant, server, blade server, mainframe computer, and other suitable computer. The electronic device may also represent various forms of mobile devices, such as a personal digital assistant, cellular telephone, smart phone, wearable device, and other similar computing device. The components shown herein, their connections and relationships, and their functions are by way of example only and are not intended to limit the implementations of the present disclosure described and/or claimed herein.

As shown in Fig. 5, the electronic device includes: one or more processors 601, a memory 602, and interfaces for connecting various components, including a high-speed interface and a low-speed interface. The various components are interconnected using different buses and may be mounted on a common motherboard or mounted in another manner as desired. The processors may process instructions configured to be executed in the electronic device, and the instructions include instructions stored in the memory or on the memory to display graphical information of GUI on an external input/output device, such as a display device coupled to the interface. In other embodiments, multiple processors and/or multiple buses may be used with multiple memories, if necessary. Also, multiple electronic devices may be connected, and each electronic device provides some of the necessary operations (e.g., in a server array, a group of blade servers, or a multi-processor system). Fig.5 illustrates a single processor 601 as an example.

The memory 602 is a non-transitory computer-readable storage medium provided herein. The memory stores therein instructions executable by at least one processor to cause the at least one processor to implement the search method according to the present disclosure. The non-transitory computer-readable storage medium of the present disclosure stores therein computer instructions for causing a computer to implement the search method according to the present disclosure.

The memory 602, as a non-transitory computer-readable storage medium, may be used to store non-transitory software programs, non-transitory computer-executable programs, and modules, such as program instructions/modules (e.g., the first pre-rendering module 201, the second pre-rendering module 202 and the output module 203 shown in Fig. 4) corresponding to the search method in the embodiments of the present the present. By running non-transitory software programs, instructions and modules stored in the memory 602, the processor 601 performs various functional applications and data processing of the search apparatus, i.e., implements the search method in the method embodiment described above.

The memory 602 may include a program storage area and a data storage area, where the program storage area may store an operating system, and an application program required for at least one function; and the data storage area may store data created according to the usage of the electronic device for implementing the search method. In addition, the memory 602 may include a high speed random access memory, and may also include a non-transitory memory, such as at least one magnetic disk storage device, flash memory device, or other non-transitory solid state storage device. In some embodiments, the memory 602 may optionally include a memory remotely located with respect to the processor 601. These remote memories may be connected via a network to the electronic device for implementing the search method. Examples of the network mentioned above include, but are not limited to, the Internet, an intranet, a local area network, a mobile communication network, and a combination thereof.

The electronic device for implementing the search method may further include: an input device 603 and an output device 604. The processor 601, the memory 602, the input device 603, and the output device 604 may be connected to each other via a bus or in other ways. In Fig. 5, a connection by a bus is taken as an example.

The input device 603 may receive input numeric or character information and generate key signal inputs related to user settings and functional controls of the electronic device for implementing the search method. For example, the input device may include a touch screen, a keypad, a mouse, a trackpad, a touch pad, a pointing stick, one or more mouse buttons, a trackball, a joystick, etc. The output device 604 may include a display device, an auxiliary lighting device (e.g., LED), a tactile feedback device (e.g., a vibration motor), etc. The display device may include, but is not limited to, a liquid crystal display (LCD), a light emitting diode (LED) display, and a plasma display. In some embodiments, the display device may be a touch screen.

Various embodiments of the systems and techniques described herein may be implemented in digital electronic circuitry, integrated circuit systems, application-specific integrated circuits (ASICs), computer hardware, firmware, software, and/or combinations thereof. These various embodiments may include implementation in one or more computer programs that may be executed and/or interpreted on a programmable system including at least one programmable processor. The programmable processor may be a dedicated or general purpose programmable processor, and may receive data and instructions from a storage system, at least one input device and at least one output device, and transmit data and the instructions to the storage system, the at least one input device and the at least one output device.

These computing programs (also referred to as programs, software, software applications, or codes) include machine instructions for a programmable processor, and may be implemented using high-level procedural and/or object-oriented programming languages, and/or assembly/machine languages. As used herein, the terms "machine-readable medium" and "computer-readable medium" refer to any computer program product, apparatus, and/or device (e.g., magnetic disk, optical disc, memory, programmable logic device (PLD)) for providing machine instructions and/or data to a programmable processor, including a machine-readable medium that receives machine instructions implemented as machine-readable signals. The term "machine-readable signal" refers to any signal used to provide machine instructions and/or data to a programmable processor.

To provide interaction with a user, the systems and techniques described herein may be implemented on a computer having: a display device (e.g., a cathode ray tube (CRT) or liquid crystal display (LCD) monitor) for displaying information to a user; and a keyboard and a pointing device (e.g., a mouse or a trackball) through which a user may provide input to the computer. Other types of devices may also be used to provide interaction with a user; for example, the feedback provided to the user may be any form of sensory feedback (e.g., visual feedback, auditory feedback, or tactile feedback); and input from the user may be received in any form, including acoustic input, voice input, or tactile input.

The systems and techniques described herein may be implemented in a computing system that includes a background component (e.g., as a data server), or a computing system that includes a middleware component (e.g., an application server), or a computing system that includes a front-end component (e.g., a user computer having a graphical user interface or a web browser through which a user may interact with embodiments of the systems and techniques described herein), or a computing system that includes any combination of such background components, middleware components, or front-end components. The components of the system may be interconnected by any form or medium of digital data communication (e.g., a communication network). Examples of communication networks include: a local area network (LAN), a wide area network (WAN), the Internet and a block chain network.

The computer system may include a client and a server. The client and server are typically far away from each other and typically interact through a communication network. The relationship of the client and the server is generated by computer programs running on respective computers and having a client-server relationship with each other.

According to technical solutions of the present disclosure, when a keyword is inputted by a user, a search request is submitted to the server in real time according to the inputted keyword, and resources returned by the server are pre-rendered in a container. When the inputted keyword is changed, a new search request is submitted to the server in real time, and a page pre-rendering is performed based on resources returned by the server in another container. In this way, when the search instruction is inputted by the user, the resources in the container corresponding to the current keyword may be outputted rapidly, such that the user may acquire the search result page corresponding to the current keyword rapidly. Compared with the related art, the search response speed may be improved according to the present disclosure.

## Claims

1. A search method, **characterized by** comprising:
sending a first search request to a server in response to a first keyword inputted by a user; and pre-rendering resources of a first search result page returned by the server in a first container in a process of returning the resources of the first search result page by the server (101); wherein the first search result page is a search result page corresponding to the first keyword;
sending a second search request to the server in case that it is detected that the user changes a current keyword to a second keyword; and pre-rendering resources of a second search result page returned by the server in a second container in a process of returning the resources of the second search result page by the server (102); wherein the second search result page is a search result page corresponding to the second keyword; and
in case that a search instruction inputted by the user is detected, outputting resources in a container corresponding to the current keyword in response to the search instruction (103);
wherein the search method further comprises:
in the process of returning the resources of the second search result page by the server, in case that a first resource of the second search result page is the same as a second resource of the first search result page, and in case that the second resource is being requested by a resource request associated with the first container and is not obtained yet from the server,
establishing an association between the resource request for the second resource and the second container; and
in case that the second resource is loaded in the first container in response to the resource request for the second resource, reusing the second resource in the second container according to the association between the resource request for the second resource and the second container, so that there is no need to send a network request for the second resource to the server multiple times, and the server does not need to return the second resource multiple times, and the second resource does not need to be pre-rendered multiple-times.

2. The search method according to claim 1, wherein the pre-rendering the resources of the second search result page returned by the server in the second container in the process of returning the resources of the second search result page by the server comprises:
in case that all pre-created containers are occupied, selecting the second container from the pre-created containers for reusing, and pre-rendering the resources of the second search result page returned by the server in the second container in the process of returning the resources of the second search result page by the server.

3. The search method according to claim 2, further comprising:
when the second container is reused or released, disassociating an ongoing resource request associated with the second container from the second container in case that there is the ongoing resource request associated with the second container.

4. The search method according to claim 3, wherein the disassociating the ongoing resource request associated with the second container from the second container in case that there is the ongoing resource request associated with the second containerer comprises:
in case that there is the ongoing resource request associated with the second container, and the ongoing resource request is reused or reusable in a third container, disassociating the resource request from the second container.

5. The search method according to claim 1, wherein the container comprises at least one of:
a container for loading a web page;
a container for loading a small program;
a container for loading structured data.

6. A search apparatus (200), **characterized by** comprising:
a first pre-rendering module (201), configured to send a first search request to a server in response to a first keyword inputted by a user; and pre-render resources of a first search result page returned by the server in a first container in a process of returning the resources of the first search result page by the server; wherein the first search result page is a search result page corresponding to the first keyword;
a second pre-rendering module (202), configured to send a second search request to the server in case that it is detected that the user changes a current keyword to a second keyword; and pre-render resources of a second search result page returned by the server in a second container in a process of returning the resources of the second search result page by the server; wherein the second search result page is a search result page corresponding to the second keyword; and
an output module (203), configured to, in case that a search instruction inputted by the user is detected, output resources in a container corresponding to the current keyword in response to the search instruction;
wherein the search apparatus (200) further comprises:
an association sub-module, configured to, in the process of returning the resources of the second search result page by the server, in case that a first resource of the second search result page is the same as a second resource of the first search result page, and in case that the second resource is being requested by a resource request associated with the first container and is not obtained yet from the server,
establish an association between the resource request for the second resource and the second container; and
a resource reusing sub-module, configured to, in case that the second resource is loaded in the first container in response to the resource request for the second resource, reuse the second resource in the second container according to the association between the resource request for the second resource and the second container, so that there is no need to send a network request for the second resource to the server multiple times, and the server does not need to return the second resource multiple times, and the second resource does not need to be pre-rendered multiple-times.

7. The search apparatus (200) according to claim 6, wherein the second pre-rendering module (202) is specifically configured to:
in case that all pre-created containers are occupied, select the second container from the pre-created containers for reusing, and pre-render the resources of the second search result page returned by the server in the second container in the process of returning the resources of the second search result page by the server.

8. The search apparatus (200) according to claim 7, further comprising:
a disassociation module, configured to, when the second container is reused or released, disassociate an ongoing resource request associated with the second container from the second container in case that there is the ongoing resource request associated with the second container.

9. The search apparatus (200) according to claim 8, wherein the disassociation module is specficially configured to:
in case that there is the ongoing resource request associated with the second container, and the ongoing resource request is reused or reusable in a third container, disassociate the resource request from the second container.

10. The search apparatus (200) according to claim 6, wherein the container comprises at least one of:
a container for loading a web page;
a container for loading a small program;
a container for loading structured data.

11. A non-transitory computer-readable storage medium storing therein computer instructions, **characterized in that** the computer instructions are used for causing the computer to implement the method according to any one of claims 1 to 5.

## Patentansprüche

1. Suchverfahren, **dadurch gekennzeichnet, dass** es umfasst:
Senden einer ersten Suchanfrage an einen Server in Reaktion auf ein erstes Stichwort, welches durch einen Benutzer eingegeben wird; und Vor-Rendern von Ressourcen einer ersten Suchergebnisseite, welche durch den Server in einem ersten Container zurückgegeben werden, in einem Prozess eines Zurückgebens der Ressourcen der ersten Suchergebnisseite durch den Server (101); wobei die erste Suchergebnisseite eine Suchergebnisseite ist, welche dem ersten Stichwort entspricht;
Senden einer zweiten Suchanfrage an den Server in einem Fall, dass detektiert wird, dass der Benutzer ein aktuelles Stichwort in ein zweites Stichwort ändert; und Vor-Rendern von Ressourcen einer zweiten Suchergebnisseite, welche durch den Server in einem zweiten Container zurückgegeben werden, in einem Prozess eines Zurückgebens der Ressourcen der zweiten Suchergebnisseite durch den Server (102); wobei die zweite Suchergebnisseite eine Suchergebnisseite ist, welche dem zweiten Stichwort entspricht; und
in einem Fall, dass eine durch den Benutzer eingegebene Suchanweisung detektiert wird, Ausgeben von Ressourcen in einem Container, welcher dem aktuellen Stichwort entspricht, in Reaktion auf die Suchanweisung (103);
wobei das Suchverfahren ferner umfasst:
in dem Prozess eines Zurückgebens der Ressourcen der zweiten Suchergebnisseite durch den Server, in einem Fall, dass eine erste Ressource der zweiten Suchergebnisseite die gleiche wie eine zweite Ressource der ersten Suchergebnisseite ist, und in einem Fall, dass die zweite Ressource durch eine Ressourcen-Anfrage angefragt wird, welche mit dem ersten Container assoziiert ist, und noch nicht von dem Server erhalten worden ist,
Herstellen einer Assoziation zwischen der Ressourcenanfrage für die zweite Ressource und dem zweiten Container; und
in einem Fall, dass die zweite Ressource in Reaktion auf die Ressourcenanfrage für die zweite Ressource in den ersten Container geladen wird, Wiederverwenden der zweiten Ressource in dem zweiten Container gemäß der Assoziation zwischen der Ressourcenanfrage für die zweite Ressource und dem zweiten Container, so dass kein Bedarf besteht, mehrere Male eine Netzwerkanfrage für die zweite Ressource an den Server zu senden, und der Server die zweite Ressource nicht mehrere Male zurückgeben muss, und die zweite Ressource nicht mehrere Male vor-gerendert werden muss.

2. Suchverfahren nach Anspruch 1, wobei das Vor-Rendern der Ressourcen der zweiten Suchergebnisseite, welche durch den Server in dem zweiten Container zurückgegeben werden, in dem Prozess eines Zurückgebens der Ressourcen der zweiten Suchergebnisseite durch den Server, umfasst:
in einem Fall, dass alle zuvor erzeugten Container belegt sind, Auswählen des zweiten Containers von den zuvor erzeugten Containern für ein Wiederverwenden, und Vor-Rendern der Ressourcen der zweiten Suchergebnisseite, welche durch den Server in dem zweiten Container zurückgegeben werden, in dem Prozess eines Zurückgebens der Ressourcen der zweiten Suchergebnisseite durch den Server.

3. Suchverfahren nach Anspruch 2, ferner umfassend:
wenn der zweite Container wiederverwendet oder freigegeben wird, Lösen einer laufenden Ressourcenanfrage, welche mit dem zweiten Container assoziiert ist, von dem zweiten Container, in einem Fall, dass die laufende Ressourcenanfrage, welche mit dem zweiten Container assoziiert ist, vorhanden ist.

4. Suchverfahren nach Anspruch 3, wobei das Lösen der laufenden Ressourcenanfrage, welche mit dem zweiten Container assoziiert ist, von dem zweiten Container, in einem Fall, dass die laufende Ressourcenanfrage, welche mit dem zweiten Container assoziiert ist, vorhanden ist, umfasst:
in einem Fall, dass die laufende Ressourcenanfrage, welche mit dem zweiten Container assoziiert ist, vorhanden ist und die laufende Ressourcenanfrage in einem dritten Container wiederverwendet wird oder wiederverwendbar ist, Lösen der Ressourcenanfrage von dem zweiten Container.

5. Suchverfahren nach Anspruch 1, wobei der Container wenigstens eines umfasst aus:
einem Container zum Laden einer Webseite;
einem Container zum Laden eines kleinen Programms;
einem Container zum Laden strukturierter Daten.

6. Suchvorrichtung (200), **dadurch gekennzeichnet, dass** sie umfasst:
ein erstes Vor-Rendermodul (201), welches dazu eingerichtet ist, eine erste Suchanfrage an einen Server in Reaktion auf ein erstes Stichwort zu senden, welches durch einen Benutzer eingegeben wird; und Ressourcen einer ersten Suchergebnisseite vor zu rendern, welche durch den Server in einem ersten Container zurückgegeben werden, in einem Prozess eines Zurückgebens der Ressourcen der ersten Suchergebnisseite durch den Server; wobei die erste Suchergebnisseite eine Suchergebnisseite ist, welche dem ersten Stichwort entspricht;
ein zweites Vor-Rendermodul (202), welches dazu eingerichtet ist, eine zweite Suchanfrage an den Server in einem Fall zu senden, dass detektiert wird, dass der Benutzer ein aktuelles Stichwort in ein zweites Stichwort ändert; und Ressourcen einer zweiten Suchergebnisseite vor zu rendern, welche durch den Server in einem zweiten Container zurückgegeben werden, in einem Prozess eines Zurückgebens der Ressourcen der zweiten Suchergebnisseite durch den Server; wobei die zweite Suchergebnisseite eine Suchergebnisseite ist, welche dem zweiten Stichwort entspricht; und
ein Ausgabemodul (203), welches dazu eingerichtet ist, in einem Fall, dass eine durch den Benutzer eingegebene Suchanweisung detektiert wird, Ressourcen in einem Container auszugeben, welcher dem aktuellen Stichwort entspricht, in Reaktion auf die Suchanweisung;
wobei die Suchvorrichtung (200) ferner umfasst:
ein Assoziation-Untermodul, welches dazu eingerichtet ist, in dem Prozess eines Zurückgebens der Ressourcen der zweiten Suchergebnisseite durch den Server, in einem Fall, dass eine erste Ressource der zweiten Suchergebnisseite die gleiche wie eine zweite Ressource der ersten Suchergebnisseite ist, und in einem Fall, dass die zweite Ressource durch eine Ressourcen-Anfrage angefragt wird, welche mit dem ersten Container assoziiert ist, und noch nicht von dem Server erhalten worden ist, eine Assoziation zwischen der Ressourcenanfrage für die zweite Ressource und dem zweiten Container herzustellen; und
ein Ressourcen-Wiederverwendung-Untermodul, welches dazu eingerichtet ist, in einem Fall, dass die zweite Ressource in Reaktion auf die Ressourcenanfrage für die zweite Ressource in den ersten Container geladen wird, die zweite Ressource in dem zweiten Container gemäß der Assoziation zwischen der Ressourcenanfrage für die zweite Ressource und dem zweiten Container wiederzuverwenden, so dass kein Bedarf besteht, mehrere Male eine Netzwerkanfrage für die zweite Ressource an den Server zu senden, und der Server die zweite Ressource nicht mehrere Male zurückgeben muss, und die zweite Ressource nicht mehrere Male vor-gerendert werden muss.

7. Suchvorrichtung (200) nach Anspruch 6, wobei das zweite Vor-Rendermodul (202) speziell eingerichtet ist zum:
in einem Fall, dass alle zuvor erzeugten Container belegt sind, Auswählen des zweiten Containers von den zuvor erzeugten Containern für ein Wiederverwenden, und Vor-Rendern der Ressourcen der zweiten Suchergebnisseite, welche durch den Server in dem zweiten Container zurückgegeben werden, in dem Prozess eines Zurückgebens der Ressourcen der zweiten Suchergebnisseite durch den Server.

8. Suchvorrichtung (200) nach Anspruch 7, ferner umfassend:
ein Lösemodul, welches dazu eingerichtet ist, wenn der zweite Container wiederverwendet oder freigegeben wird, eine laufende Ressourcenanfrage, welche mit dem zweiten Container assoziiert ist, von dem zweiten Container zu lösen, in einem Fall, dass die laufende Ressourcenanfrage, welche mit dem zweiten Container assoziiert ist, vorhanden ist.

9. Suchvorrichtung (200) nach Anspruch 8, wobei das Lösemodul speziell eingerichtet ist zum:
in einem Fall, dass die laufende Ressourcenanfrage, welche mit dem zweiten Container assoziiert ist, vorhanden ist und die laufende Ressourcenanfrage in einem dritten Container wiederverwendet wird oder wiederverwendbar ist, Lösen der Ressourcenanfrage von dem zweiten Container.

10. Suchvorrichtung (200) nach Anspruch 6, wobei der Container wenigstens eines umfasst aus:
einem Container zum Laden einer Webseite;
einem Container zum Laden eines kleinen Programms;
einem Container zum Laden strukturierter Daten.

11. Nicht-transitorisches computerlesbares Speichermedium, welches Computeranweisungen darin speichert, **dadurch gekennzeichnet, dass** die Computeranweisungen dazu verwendet werden, den Computer dazu zu veranlassen, das Verfahren nach einem der Ansprüche 1 bis 5 zu implementieren.

## Revendications

1. Procédé de recherche, **caractérisé en ce qu'**il comprend :
l'envoi d'une première demande de recherche à un serveur en réponse à un premier mot-clé entré par un utilisateur ; et le prérendu de ressources d'une première page de résultats de recherche, renvoyées par le serveur dans un premier conteneur dans un processus de renvoi des ressources de la première page de résultats de recherche par le serveur (101) ; dans lequel la première page de résultats de recherche est une page de résultats de recherche correspondant au premier mot-clé ;
l'envoi d'une deuxième demande de recherche au serveur au cas où il est détecté que l'utilisateur modifie un mot-clé courant en un deuxième mot-clé ; et le prérendu de ressources d'une deuxième page de résultats de recherche, renvoyées par le serveur dans un deuxième conteneur dans un processus de renvoi des ressources de la deuxième page de résultats de recherche par le serveur (102) ; dans lequel la deuxième page de résultats de recherche est une page de résultats de recherche correspondant au deuxième mot-clé ; et
au cas où une instruction de recherche entrée par l'utilisateur est détectée, la sortie de ressources dans un conteneur correspondant au mot-clé courant en réponse à l'instruction de recherche (103) ;
dans lequel le procédé de recherche comprend en outre :
dans le processus de renvoi des ressources de la deuxième page de résultats de recherche par le serveur, au cas où une première ressource de la deuxième page de résultats de recherche est la même qu'une deuxième ressource de la première page de résultats de recherche, et au cas où la deuxième ressource est en train d'être demandée par une demande de ressources associée au premier conteneur et n'est pas encore obtenue à partir du serveur,
l'établissement d'une association entre la demande de ressources pour la deuxième ressource et le deuxième conteneur ; et
au cas où la deuxième ressource est chargée dans le premier conteneur en réponse à la demande de ressources pour la deuxième ressource, la réutilisation de la deuxième ressource dans le deuxième conteneur en fonction de l'association entre la demande de ressources pour la deuxième ressource et le deuxième conteneur, de sorte qu'il n'est pas nécessaire d'envoyer une demande de réseau pour la deuxième ressource au serveur de multiples fois, et le serveur n'a pas à renvoyer la deuxième ressource de multiples fois, et la deuxième ressource ne nécessite pas d'être prérendue de multiples fois.

2. Procédé de recherche selon la revendication 1, dans lequel le prérendu des ressources de la deuxième page de résultats de recherche, renvoyées par le serveur dans le deuxième conteneur dans le processus de renvoi des ressources de la deuxième page de résultats de recherche par le serveur comprend :
au cas où tous les conteneurs précréés sont occupés, la sélection du deuxième conteneur parmi les conteneurs précréés pour une réutilisation, et le prérendu des ressources de la deuxième page de résultats de recherche, renvoyées par le serveur dans le deuxième conteneur dans le processus de renvoi des ressources de la deuxième page de résultats de recherche par le serveur.

3. Procédé de recherche selon la revendication 2, comprenant en outre :
lorsque le deuxième conteneur est réutilisé ou libéré, la dissociation d'une demande de ressources en cours associée au deuxième conteneur par rapport au deuxième conteneur au cas où il existe la demande de ressources en cours associée au deuxième conteneur.

4. Procédé de recherche selon la revendication 3, dans lequel la dissociation de la demande de ressources en cours associée au deuxième conteneur par rapport au deuxième conteneur au cas où il existe la demande de ressources en cours associée au deuxième conteneur comprend :
au cas où il existe la demande de ressources en cours associée au deuxième conteneur, et la demande de ressources en cours est réutilisée ou réutilisable dans un troisième conteneur, la dissociation de la demande de ressources par rapport au deuxième conteneur.

5. Procédé de recherche selon la revendication 1, dans lequel le conteneur comprend au moins un parmi :
un conteneur pour charger une page web ;
un conteneur pour charger un petit programme ;
un conteneur pour charger des données structurées.

6. Appareil de recherche (200), **caractérisé en ce qu'**il comprend :
un premier module de prérendu (201), configuré pour envoyer une première demande de recherche à un serveur en réponse à un premier mot-clé entré par un utilisateur ; et prérendre des ressources d'une première page de résultats de recherche, renvoyées par le serveur dans un premier conteneur dans un processus de renvoi des ressources de la première page de résultats de recherche par le serveur ; dans lequel la première page de résultats de recherche est une page de résultats de recherche correspondant au premier mot-clé ;
un deuxième module de prérendu (202), configuré pour envoyer une deuxième demande de recherche au serveur au cas où il est détecté que l'utilisateur modifie un mot-clé courant en un deuxième mot-clé ; et prérendre des ressources d'une deuxième page de résultats de recherche, renvoyées par le serveur dans un deuxième conteneur dans un processus de renvoi des ressources de la deuxième page de résultats de recherche par le serveur ; dans lequel la deuxième page de résultats de recherche est une page de résultats de recherche correspondant au deuxième mot-clé ; et
un module de sortie (203), configuré pour, au cas où une instruction de recherche entrée par l'utilisateur est détectée, délivrer en sortie des ressources dans un conteneur correspondant au mot-clé courant en réponse à l'instruction de recherche ;
dans lequel l'appareil de recherche (200) comprend en outre :
un sous-module d'association, configuré pour, dans le processus de renvoi des ressources de la deuxième page de résultats de recherche par le serveur, au cas où une première ressource de la deuxième page de résultats de recherche est la même qu'une deuxième ressource de la première page de résultats de recherche, et au cas où la deuxième ressource est en train d'être demandée par une demande de ressources associée au premier conteneur et n'est pas encore obtenue à partir du serveur,
établir une association entre la demande de ressources pour la deuxième ressource et le deuxième conteneur ; et
un sous-module de réutilisation de ressources, configuré pour, au cas où la deuxième ressource est chargée dans le premier conteneur en réponse à la demande de ressources pour la deuxième ressource, réutiliser la deuxième ressource dans le deuxième conteneur en fonction de l'association entre la demande de ressources pour la deuxième ressource et le deuxième conteneur, de sorte qu'il n'est pas nécessaire d'envoyer une demande de réseau pour la deuxième ressource au serveur de multiples fois, et le serveur n'a pas à renvoyer la deuxième ressource de multiples fois, et la deuxième ressource ne nécessite pas d'être prérendue de multiples fois.

7. Appareil de recherche (200) selon la revendication 6, dans lequel le deuxième module de prérendu (202) est spécifiquement configuré pour :
au cas où tous les conteneurs précréés sont occupés, sélectionner le deuxième conteneur parmi les conteneurs précréés pour une réutilisation, et prérendre des ressources de la deuxième page de résultats de recherche renvoyées par le serveur dans le deuxième conteneur dans le processus de renvoi des ressources de la deuxième page de résultats de recherche par le serveur.

8. Appareil de recherche (200) selon la revendication 7, comprenant en outre :
un module de dissociation, configuré pour, lorsque le deuxième conteneur est réutilisé ou libéré, dissocier une demande de ressources en cours associée au deuxième conteneur par rapport au deuxième conteneur au cas où il existe la demande de ressources en cours associée au deuxième conteneur.

9. Appareil de recherche (200) selon la revendication 8, dans lequel le module de dissociation est spécifiquement conçu pour :
au cas où il existe la demande de ressources en cours associée au deuxième conteneur, et la demande de ressources en cours est réutilisée ou réutilisable dans un troisième conteneur, dissocier la demande de ressources par rapport au deuxième conteneur.

10. Appareil de recherche (200) selon la revendication 6, dans lequel le conteneur comprend au moins un parmi :
un conteneur pour charger une page web ;
un conteneur pour charger un petit programme ;
un conteneur pour charger des données structurées.

11. Support de stockage non transitoire lisible par ordinateur stockant à l'intérieur de celui-ci des instructions d'ordinateur, **caractérisé en ce que** les instructions d'ordinateur sont utilisées pour amener l'ordinateur à mettre en oeuvre le procédé selon l'une quelconque des revendications 1 à 5.
